(19) Europäisches Patentamt
European Patent Office
Office européen des brevets

(11) EP 4 675 719 A1

(12) EUROPEAN PATENT APPLICATION
published in accordance with Art. 153(4) EPC

(43) Date of publication:
07.01.2026 Bulletin 2026/02

(21) Application number: 23924893.3

(22) Date of filing: 31.08.2023

(51) International Patent Classification (IPC):
H01M 10/04 (2006.01)    H01M 50/15 (2021.01)
H01M 50/533 (2021.01)

(52) Cooperative Patent Classification (CPC):
H01M 10/04; H01M 50/15; H01M 50/533;
Y02E 60/10

(86) International application number:
PCT/CN2023/116277

(87) International publication number:
WO 2024/178937 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.02.2023 CN 202320448632 U

(71) Applicant: BYD Company Limited
Shenzhen, Guangdong 518118 (CN)

(72) Inventors:
• YUAN, Wansong
  Shenzhen, Guangdong 518118 (CN)

• DENG, Dongjun
  Shenzhen, Guangdong 518118 (CN)
• YUAN, Jiang
  Shenzhen, Guangdong 518118 (CN)
• LIANG, Meihao
  Shenzhen, Guangdong 518118 (CN)
• GAO, Xin
  Shenzhen, Guangdong 518118 (CN)

(74) Representative: Mathys & Squire
The Shard
32 London Bridge Street
London SE1 9SG (GB)

(54) BATTERY CELL, BATTERY MODULE AND VEHICLE

(57) A battery cell (100), a battery module (200) and a vehicle (1000) are provided. The battery cell (100) includes: a housing assembly (10) and an electrode core (20). The housing assembly (10) includes a housing body (11) and a cover plate (12), the cover plate (12) is disposed at an end of the housing body (11) to define an accommodation cavity, and the cover plate (12) is provided with a terminal pole (101). An electrode core (20) is arranged in the accommodation cavity, the electrode core (20) is provided with a tab (21), and the tab (21) is electrically connected to the terminal pole (101). A support portion (30) is disposed on an inner side of the cover plate (12), and in a first direction, support portions (30) are disposed on two sides of the tab (21). In the first direction, a support width of each support portion (30) is W1, a width of the electrode core (20) is W, and the support width and the width of the electrode core (20) satisfy the following relationship: $W1 \leq 1/3W$.

FIG. 4

**Description**

**CROSS-REFERENCE TO RELATED APPLICATIONS**

This application claims priority to Chinese patent application No. 2023204486329, filed on February 28, 2023, and entitled "BATTERY CELL, BATTERY MODULE AND VEHICLE," which is incorporated herein by reference in its entirety.

**TECHNICAL FIELD**

This application relates to the technical field of batteries, and in particular to a battery cell, a battery module and a vehicle.

**BACKGROUND**

Among all energy forms, electricity is the most user-friendly, environmentally clean, and efficient energy source. Batteries, serving as best apparatuses for storing electricity, are widely used in people's daily lives and have a decisive influence on people's lives. With gradual development of battery technologies, high-performance batteries are increasingly sought after. In the related art, the poor stability of the battery electrode core in the housing results in poor resistance of the electrode core to mechanical vibration and impact.

**SUMMARY**

This application is intended to solve at least one of the technical problems existing in the related art. In view of this, one objective of this application is to provide a battery cell, which can enhance stability of an electrode core and help reduce difficulty of assembly.

This application further provides a battery module using the battery cell described above.

This application further provides a vehicle using the battery module described above.

The battery cell according to an embodiment of this application includes: a housing assembly, wherein the housing assembly includes a housing body and a cover plate, the cover plate is disposed at an end of the housing body to define an accommodation cavity, and the cover plate is provided with a terminal pole; and an electrode core, wherein the electrode core is arranged in the accommodation cavity, the electrode core is provided with a tab, and the tab is electrically connected to the terminal pole. A support portion is disposed on an inner side of the cover plate, and in a first direction, support portions are disposed on two sides of the tab. In the first direction, a support width of each support portion is W1, a width of the electrode core is W, and the support width and the width of the electrode core satisfy the following relationship: W1≤1/3W.

In the battery cell according to the embodiment of this application, the support portion is disposed on the inner side of the cover plate, and in the first direction, the support portions are disposed on two sides of the tab. The support portion can abut against the electrode core to support the electrode core, thereby enhancing stability of the electrode core. In addition, the two support portions are respectively located on two sides of the tab to avoid the tab, so that the tab is electrically connected to the terminal pole. This helps reduce difficulty of assembly.

The battery module according to this application includes a box; and a plurality of battery cells, wherein each battery cell is the battery cell according to any one of the foregoing embodiments, and the plurality of battery cells are arranged in the box.

The vehicle according to this application includes the battery module described above.

Additional aspects and advantages of this application are set forth in part in the following description, and in part will become apparent from the following description, or may be learned through the practice of this application.

**BRIEF DESCRIPTION OF THE DRAWINGS**

FIG. 1 is a diagram of a battery cell according to some embodiments of this application;
FIG. 2 is an exploded view of a battery cell according to some embodiments of this application;
FIG. 3 is a diagram of a cover plate of a battery cell shown in FIG. 2;
FIG. 4 is a partial cross-sectional view of a battery cell shown in FIG. 2 in a length direction;
FIG. 5 is a cross-sectional view of a battery cell shown in FIG. 2 in a length direction;
FIG. 6 is an exploded view of a battery cell according to some other embodiments of this application; and
FIG. 7 is a diagram of a vehicle according to some embodiments of this application.

Reference numerals in the drawings are as follows:

1000: vehicle;
200: battery module; 100: battery cell;
10: housing assembly; 101: terminal pole;
11: housing body; 12: cover plate;
20: electrode core; 201: first surface; 202: second surface;
21: tab;
30: support portion;
40: spacer;
50: insulating film;
60: adhesive.

**DESCRIPTION OF EMBODIMENTS**

Embodiments of this application are described in detail below, examples of which are shown in the accompanying drawings, where same or similar reference numerals throughout represent same or similar elements or elements having same or similar functions. The embodiments described below with reference to the accompanying drawings are examples and are merely used to explain this application, and shall not be construed as a limitation on this application.

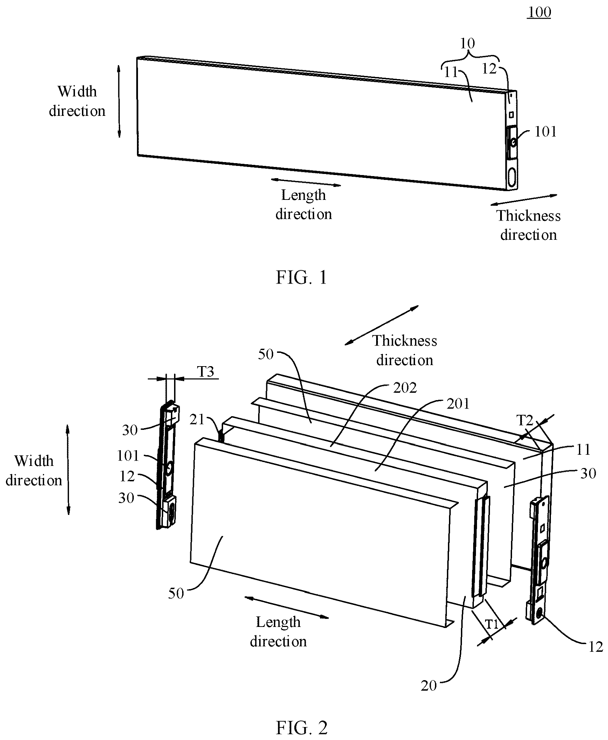

A battery cell 100 in an embodiment of this application is described below with reference to FIG. 1 to FIG. 7.

The battery cell 100 in this embodiment of this application includes: a housing assembly 10, and an electrode core 20.

As shown in FIG. 1 and FIG. 2, the housing assembly 10 includes a housing body 11 and a cover plate 12. The cover plate 12 is disposed at an end of the housing body 11 to define an accommodation cavity. The cover plate 12 is provided with a terminal pole 101. An electrode core 20 is arranged in the accommodation cavity. The electrode core 20 is provided with a tab 21, and the tab 21 is electrically connected to the terminal pole 101. A support portion 30 is disposed on an inner side of the cover plate 12. In a first direction, support portions 30 are disposed on two sides of the tab 21. In the first direction, a support width of each support portion 30 is W1, a width of the electrode core 20 is W, and the support width and the width of the electrode core 20 satisfy the following relationship: W1≤1/3W.

In this way, an accommodation cavity is jointly defined by the housing body 11 and the cover plate 12, so that the electrode core 20 can be installed in the accommodation cavity. The support portion 30 can abut against the electrode core 20 to support the electrode core 20. Moreover, the two support portions 30 are respectively located on two sides of the tab 21 to avoid the tab 21, so that the tab 21 is electrically connected to the terminal pole 101. This helps reduce difficulty of assembly.

For example, as shown in FIG. 2, the housing assembly 10 includes a housing body 11 and a cover plate 12. The housing body 11 is configured as a square tubular structure, and the housing body 11 is provided with openings at two ends in a length direction, respectively. Two cover plates 12 are disposed, and the two cover plates 12 are configured to be respectively installed at the two openings of the housing body 11 to close the openings, so that the housing body 11 and the cover plate 12 can define a sealed accommodation cavity. The electrode core 20 is installed in the accommodation cavity. Each cover plate 12 is provided with a terminal pole 101, the terminal pole 101 extends through the cover plate 12 in a thickness direction, and is configured to be electrically connected to the tab 21 of an electrode sheet with a same polarity, so that the electrode core 20 can supply power externally.

The foregoing arrangement helps reduce the manufacturing difficulty of the battery cell 100 and improving reliability of the battery cell 100.

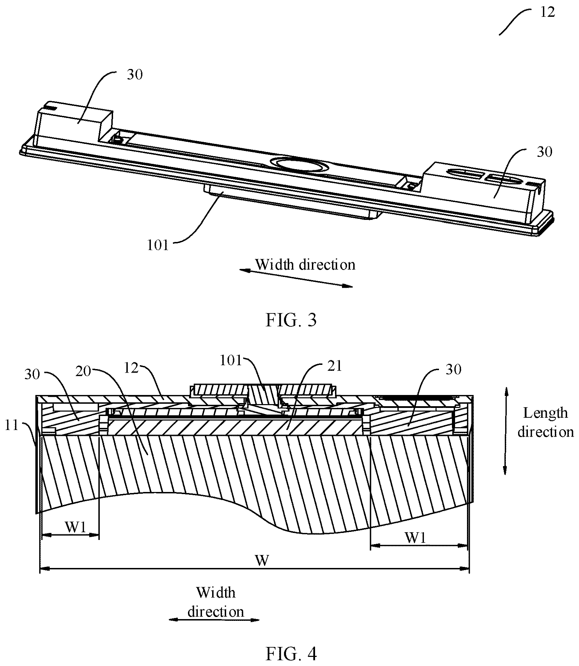

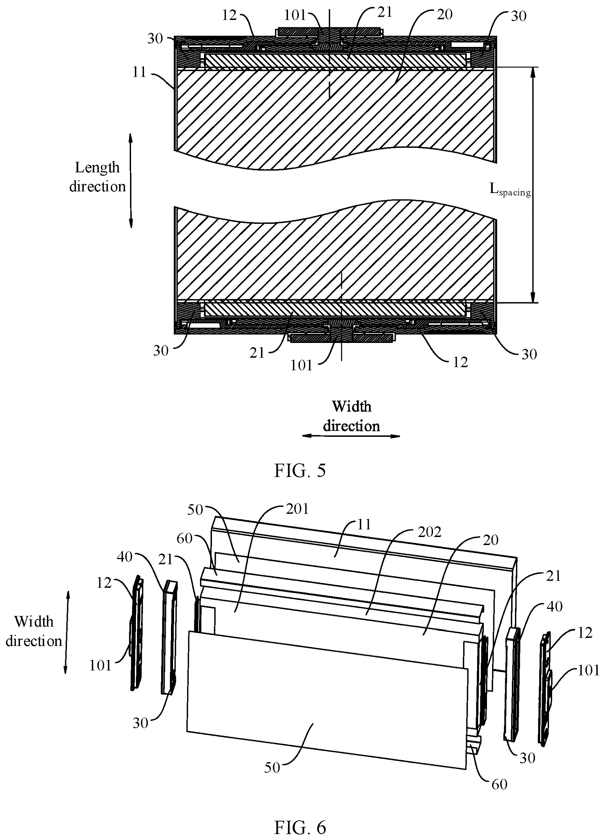

As shown in FIG. 3, the support portion 30 may be disposed on the inner side of the cover plate 12. In other words, the support portion 30 and the cover plate 12 may be of an integral structure. Alternatively, as shown in FIG. 6, the support portion 30 may be disposed on the spacer 40 to facilitate separate design of the support portion 30. This helps reduce difficulty of design.

As shown in FIG. 2, the support portion 30 and the cover plate 12 may be of an integral structure. As shown in FIG. 4, each cover plate 12 is provided with two support portions 30, and the two support portions 30 are spaced apart and distributed in a first direction. For example, the first direction is parallel to a width direction of the electrode core 20, the two support portions 30 on each cover plate 12 are located at two ends of the cover plate 12 respectively, and the two support portions 30 on each cover plate 12 both abut against one end of the electrode core 20 to support the electrode core 20, thereby enhancing stability of the electrode core 20. In addition, an avoidance space is formed between the two support portions 30, and the tab 21 can extend into the avoidance space to be electrically connected to the terminal pole 101.

In the width direction, the support width of each support portion 30 is W1, the width of the electrode core 20 is W, and the support width and the width of the electrode core 20 satisfy the following relationship: W1≤1/3W. It should be noted that both W and W1 are measured in mm.

For example, each cover plate 12 is provided with two support portions 30, the two support portions 30 are located at two ends of the cover plate 12 respectively, and the support width W1 of each support portion 30 is 1/3W, the support width W1 of the support portion 30 is 1/5W, or the support width W1 of the support portion 30 is 3/20W. In other words, when a value of the support width W1 of the support portion 30 is within a foregoing value range, the support portion 30 can be used to effectively limit the electrode core 20, thereby improving the installation stability of the electrode core 20. In addition, in a direction parallel to the width direction of the electrode core 20, it ensures sufficient avoidance space between the two support portions 30 on the same cover plate 12 to ensure that the electrode core 20 has a sufficient flow area when the tab 21 of the electrode core 20 is electrically connected to the terminal pole 101.

In the battery cell 100 according to the embodiment of this application, the support portion 30 is disposed on the inner side of the cover plate 12. In the first direction, support portions 30 are disposed on two sides of the tab 21. The support portion 30 can abut against the electrode core 20 to support the electrode core 20, thereby enhancing stability of the electrode core 20. In addition, the two support portions 30 are respectively located at two sides of the tab 21 to avoid the tab 21, so that the tab 21 is electrically connected to the terminal pole 101. This helps reduce difficulty of assembly.

In some embodiments, as shown in FIG. 2, in a thickness direction of the battery cell 100, the first direction is perpendicular to the thickness direction, a thickness of the electrode core 20 is T1, a thickness of the accommodation cavity is T2, a thickness of the support portion 30 is T3, and the battery cell 100 satisfies the following relationship: T1-2≤T3<T2. It should be noted that T1, T2 and T3 are all measured in mm.

When the battery cell 100 satisfies the foregoing proportional relationship, the support portion 30 can abut against the electrode core 20 to support the electrode core 20. In addition, the support portion 30 can be installed in the accommodation cavity to fully utilize an installation space in the accommodation cavity. This helps achieve the miniaturized design of the battery cell 100.

In some embodiments, as shown in FIG. 2, in a second direction, the cover plates 12 are arranged on two sides of the housing body 11, each of the cover plates 12 is provided with the support portion 30, and the first direction is perpendicular to the second direction.

For example, as shown in FIG. 2 and FIG. 5, the first direction is the width direction of the electrode core 20, and the second direction is the length direction of the electrode core 20. In other words, the electrode core 20 is supported by the corresponding support portions 30 of the cover plate 12 at two ends of the electrode core 20 in the length direction. Therefore, the electrode core 20 can be effectively limited at two ends of the electrode core 20 in the length direction, thereby improving installation stability of the electrode core 20.

Further, as shown in FIG. 5, in the second direction, a distance between the support portions 30 on two sides of the electrode core 20 is $L_{spacing}$, a length of a separator of the electrode core 20 is $L_{separator}$, and the battery cell 100 satisfies the following relationship: $L_{separator}-6<L_{spacing}\leq L_{separator}$. It should be noted that both $L_{spacing}$ and $L_{separator}$ are measured in mm.

It should be noted that the separator of the electrode core 20 is wrapped around a surface of the electrode core 20. Optionally, the length of the separator of the electrode core 20 is greater than that of the electrode core 20. Therefore, with the length of the separator as a standard, when the battery cell 100 satisfies the relationship: $L_{separator}-6<L_{spacing}\leq L_{separator}$, it ensures that the electrode core 20 can be assembled, and the support portion 30 can play a role in supporting and limiting the electrode core 20.

For example, when $L_{spacing}$ is equal to $L_{separator}$, the support portion 30 can be ensured to be in contact with the separator to play a process control role, or when $L_{spacing}$ is equal to $L_{separator}$ minus 6, it ensures that the support portion 30 will not cause extrusion of the electrode sheet when compressing the separator.

In some embodiments, as shown in FIG. 6, the battery cell 100 further includes a spacer 40.

The spacer 40 is disposed on the inner side of the cover plate 12, the support portion 30 is disposed on the spacer 40, the spacer 40 is configured to define an annular isolation cavity, and the tab 21 is arranged in the isolation cavity. In the first direction, the support portions 30 are located on two sides of the isolation cavity.

Therefore, the support portion 30 can be integrated on the spacer 40 to facilitate the separate design of the support portion 30. The spacer 40 is configured to define an annular isolation cavity to facilitate the tab 21 to pass through the isolation cavity to be electrically connected to the terminal pole 101. In addition, in the first direction, the support portions 30 are located on two sides of the isolation cavity to ensure that the support portions 30 can support the electrode core 20.

In some embodiments, as shown in FIG. 2, the electrode core 20 includes two first surfaces 201 that are oppositely arranged, and an area of the first surfaces 201 is greater than that of a remaining surface of the electrode core 20. The battery cell 100 also includes two insulating films 50, and the two insulating films 50 are attached to the two first surfaces 201 respectively. The first direction is a width direction of the first surface 201, and the insulating films 50 are bonded to the housing body 11.

Two insulating films 50 are disposed, and the two insulating films 50 are installed between the first surfaces 201 of the electrode core 20 and the inner wall of the housing body 11 respectively. In this way, the first surface 201 of the electrode core 20 can be separated from the inner wall of the housing body 11 by the insulating film 50 to achieve insulation between the electrode core 20 and the housing body 11 and enhance insulation stability between the electrode core 20 and the housing body 11. Moreover, the insulating film 50 is bonded to the housing body 11. This helps enhance stability of the insulating film 50.

For example, the electrode core 20 is configured as a blade-type electrode core, and tabs 21 are located at two ends of the electrode core 20 in the length direction. In the thickness direction of the electrode core 20, the electrode core 20 is provided with two first surfaces 201 that are oppositely arranged, and an area of the first surfaces 201 is greater than that of a remaining surface. In other words, the first surface 201 is a large surface of the electrode core 20.

During actual assembly, the two insulating films 50 are attached to the two first surfaces 201 of the electrode core 20 respectively so that the two insulating films 50 can be wrapped around the two first surfaces 201 of the electrode core 20, and then the first surface 201 of the electrode core 20 can be separated from the inner wall of the housing body 11 to achieve insulation between the electrode core 20 and the housing body 11 and enhance insulation stability between the electrode core 20 and the housing body 11.

In some embodiments, as shown in FIG. 2, in the first direction, the two insulating films 50 are in lap joint at side edges on a same side to insulate and separate the electrode core 20 from the housing assembly 10.

For example, the first direction is the width direction of the electrode core 20, and the two insulating films 50 are in lap joint at side edges on the same side of the electrode core 20 in the width direction. That is, in the width direction of the electrode core 20, a width of the insulating film 50 is greater than that of the electrode core 20. In this way, in the width direction of the electrode core 20, at least a part of the insulating film 50 protrudes from the electrode core 20, and then a part of the side edge of the insulating film 50 protruding from the electrode core 20 is bent toward a surface of the electrode core 20 in the width direction, so that the part of the insulating film 50 protruding from the electrode core 20 is attached to the surface of the electrode core 20 in the width direction and two side edges of one of the two insulating films 50 in the width direction form a lap joint with two side edges of the other insulating film 50. That is, the two side edges of the two insulating films 50 form a lap joint on the surface of the electrode core 20 in the width direction, respectively.

Therefore, the two insulating films 50 can be wrapped around the two first surfaces 201 of the electrode core 20 and two side surfaces of the electrode core in the width direction. In this way, when the electrode core 20 is installed in the housing assembly 10, the two first surfaces 201 of the electrode core 20 and the two side surfaces of the electrode core in the width direction can be separated from the housing body 11 by the two insulating films 50 to avoid a short circuit caused by contact between the surface of the electrode core 20 and the housing body 11, thereby achieving insulation between the electrode core 20 and the housing body 11 and enhancing insulation stability between the electrode core 20 and the housing body 11.

In some other embodiments, as shown in FIG. 6, in the first direction, the electrode core 20 is provided with second surfaces 202 that are oppositely arranged, and an adhesive 60 is disposed on the second surface 202, and the adhesive 60 has an overlapping region with each of the insulating films 50.

In this way, the adhesive 60 on the second surface 202 can be respectively bonded to the two insulating films 50 to fasten the two insulating films 50 to the first surfaces 201 of the electrode core 20, thereby enhancing stability of the insulating film 50. Moreover, a method for fastening the insulating film 50 by the adhesive 60 is simpler. This helps improve production efficiency.

For example, the electrode core 20 is configured as a blade-type electrode core, the first direction is the width direction of the electrode core 20, and in the thickness direction of the electrode core 20, the electrode core 20 is provided with two first surfaces 201 that are oppositely arranged, an area of the first surfaces 201 is greater than that of a remaining surface. In other words, the first surface 201 is a large surface of the electrode core 20. Moreover, in the width direction of the electrode core 20, the electrode core 20 is provided with second surfaces 202 that are oppositely arranged, and an adhesive 60 is disposed on the second surface 202.

During actual assembly, the two insulating films 50 are attached to the two first surfaces 201 of the electrode core 20 respectively so that the two insulating films 50 can be wrapped around the two first surfaces 201 of the electrode core 20, and then the first surface 201 of the electrode core 20 can be separated from the inner wall of the housing body 11 to achieve the insulation between the electrode core 20 and the housing body 11 and enhance the insulation stability between the electrode core 20 and the housing body 11. The two adhesives 60 are respectively bonded to the two second surfaces 202, and in the thickness direction of the electrode core 20, two side edges of the adhesive 60 are respectively bent toward the first surfaces 201, so that the two side edges of the adhesive 60 are bonded to the two insulating films 50 respectively.

In this way, the two insulating films 50 can be fastened to the first surfaces 201 of the electrode core 20 by the adhesive 60 to enhance stability of the insulating films 50. Moreover, a method for fastening the insulating film 50 by the adhesive 60 is simpler. This helps improve production efficiency.

In some embodiments, a length of the battery cell 100 ranges from 400 mm to 1500 mm, a height of the battery cell 100 ranges from 80 mm to 240 mm, and a thickness of the battery cell 100 ranges from 10 mm to 40 mm.

For example, the battery cell 100 is configured as a blade-type battery, and the length of the battery cell 100 is 500 mm, the height of the battery cell 100 is 100 mm, and the thickness of the battery cell 100 is 10 mm. Alternatively, the length of the battery cell 100 is 600 mm, the height of the battery cell 100 is 200 mm, and the thickness of the battery cell 100 is 20 mm. Alternatively, the length of the battery cell 100 is 1000 mm, the height of the battery cell 100 is 160 mm, and the thickness of the battery cell 100 is 36 mm.

That is, when the length of the battery cell 100, the height of the battery cell 100 and the thickness of the battery cell 100 are within the foregoing ranges, it ensures that the battery cell 100 has sufficient energy density. This helps control the size of the battery cell 100 and facilitating mass production.

This application further provides a battery module 200.

The battery module 200 according to an embodiment of this application includes: a box, and a plurality of battery cells 100.

The battery cell 100 is the battery cell 100 according to any one of foregoing embodiments, and the plurality of battery cells 100 are arranged in the box.

For example, the battery module 200 may be provided with a box and a plurality of battery cells 100. The box may be configured as a square structure, an installation cavity is formed in the box, and the plurality of battery cells 100 are installed in the installation cavity. The plurality of battery cells 100 may be arranged sequentially or spaced apart, and the plurality of battery cells 100 may be used for synchronous charging and discharging, so that the battery module can operate stably.

In the battery module 200 according to the embodiment of this application, a support portion 30 is disposed on an inner side of a cover plate 12 of the battery cell 100, in a first direction, support portions 30 are disposed on two sides of a tab 21. The support portion 30 can abut against an electrode core 20 to support the electrode core 20, thereby enhancing stability of the electrode core 20. In addition, the two support portions 30 are respectively located on two sides of the tab 21 to avoid the tab 21, so that the tab 21 is electrically connected to a terminal pole 101. This helps reduce difficulty of assembly.

This application further provides a vehicle 1000.

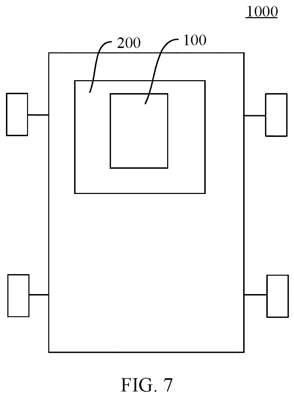

As shown in FIG. 7, the vehicle 1000 according to an embodiment of this application includes the battery module 200 according to any one of the foregoing embodiments.

In the vehicle 1000 according to an embodiment of this application, a support portion 30 is disposed on an inner side of a cover plate 12 of a battery cell 100, in a first direction, support portions 30 are disposed on two sides of a tab 21. The support portion 30 can abut against an electrode core 20 to support the electrode core 20, thereby enhancing stability of the electrode core 20. In addition, the two support portions 30 are respectively located on two sides of the tab 21 to avoid the tab 21, so that the tab 21 is electrically connected to a terminal pole 101. This helps reduce difficulty of assembly.

In the description of this specification, descriptions referring to the terms "one embodiment", "some embodiments", "example embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily aimed at the same embodiment or example. Moreover, specific features, structures, materials or characteristics described may be combined in any one or more embodiments or examples in a suitable manner.

Although embodiments of this application have been shown and described, those of ordinary skill in the art can understand that many changes, modifications, substitutions and variations can be made to these embodiments without departing from the principles and purposes of this application, and the scope of this application is defined by the claims and their equivalents.

## Claims

1. A battery cell (100), comprising:

    a housing assembly (10), wherein the housing assembly (10) comprises a housing body (11) and a cover plate (12), the cover plate (12) is disposed at an end of the housing body (11) to define an accommodation cavity, and the cover plate (12) is provided with a terminal pole (101); and

    an electrode core (20), wherein the electrode core (20) is arranged in the accommodation cavity, the electrode core (20) is provided with a tab (21), and the tab (21) is electrically connected to the terminal pole (101);

    a support portion (30) is disposed on an inner side of the cover plate (12); in a first direction, support portions (30) are disposed on two sides of the tab (21); and in the first direction, a support width of each support portion (30) is W1, a width of the electrode core (20) is W, and the support width and the width of the electrode core (20) satisfy the following relationship: $W1 \leq 1/3W$.

2. The battery cell (100) according to claim 1, wherein, in a thickness direction of the battery cell (100), the first direction is perpendicular to the thickness direction, a thickness of the electrode core (20) is T1, a thickness of the accommodation cavity is T2, a thickness of the support portion (30) is T3, and the battery cell (100) satisfies the following relationship:

$$T1-2 \leq T3 < T2.$$

3. The battery cell (100) according to claim 1 or 2, wherein, in a second direction, cover plates (12) are disposed on two sides of the housing body (11), each of the cover plates (12) is provided with the support portion (30), and the first direction is perpendicular to the second direction.

4. The battery cell (100) according to claim 3, wherein, in the second direction, a distance between the support portions (30) on two sides of the electrode core (20) is $L_{spacing}$, a length of a separator of the electrode core (20) is $L_{separator}$, and the battery cell (100) satisfies the following relationship:

$$L_{separator}-6 < L_{spacing} \leq L_{separator}.$$

5. The battery cell (100) according to any one of claims 1 to 4, further comprising a spacer (40), wherein the spacer (40) is disposed on the inner side of the cover plate (12), the support portion (30) is disposed on the spacer (40), the spacer (40) is configured to define an annular isolation cavity, and the tab (21) is arranged in the isolation cavity; and in the first direction, the support portions (30) are located on two sides of the isolation cavity.

6. The battery cell (100) according to any one of claims 1 to 5, wherein the electrode core (20) comprises two first surfaces (201) that are oppositely arranged, and an area of the first surfaces (201) is greater than an area of a remaining surface of the electrode core (20);

the battery cell (100) further comprises two insulating films (50), the two insulating films (50) are attached to the two first surfaces (201) respectively, the first direction is a width direction of the first surface (201), and the insulating films (50) are bonded to the housing body (11).

7. The battery cell (100) according to claim 6, wherein, in the first direction, the two insulating films (50) are in lap joint at side edges on a same side to insulate and separate the electrode core (20) from the housing assembly (10).

8. The battery cell (100) according to claim 6 or 7, wherein, in the first direction, the electrode core (20) is provided with second surfaces (202) that are oppositely arranged, an adhesive (60) is disposed on the second surface (202), and the adhesive (60) has an overlapping region with each of the insulating films (50).

9. A battery module (200), comprising:

   a box; and
   a plurality of battery cells (100), wherein the battery cell (100) is the battery cell (100) according to any one of claims 1 to 8, and the plurality of battery cells (100) are arranged in the box.

10. A vehicle (1000), comprising the battery module (200) according to claim 9.

FIG. 1

FIG. 2

Width direction

FIG. 3

Length direction

W1    W    W1

Width direction

FIG. 4

FIG. 5

FIG. 6

FIG. 7

## INTERNATIONAL SEARCH REPORT

| | International application No. |
|---|---|
| | **PCT/CN2023/116277** |

**A.    CLASSIFICATION OF SUBJECT MATTER**

H01M10/04(2006.01)i;  H01M50/15(2021.01)i;  H01M50/533(2021.01)i

According to International Patent Classification (IPC) or to both national classification and IPC

**B.    FIELDS SEARCHED**

Minimum documentation searched (classification system followed by classification symbols)

IPC：H01M10/-, H01M50/-

Documentation searched other than minimum documentation to the extent that such documents are included in the fields searched

Electronic data base consulted during the international search (name of data base and, where practicable, search terms used)

CNTXT, DWPI, CNKI, STN, ISI: 电池, 极耳, 固定, 防护, 支撑, 盖片, 盖板, battery, tab, fix+, protect+, support+, cover

**C.    DOCUMENTS CONSIDERED TO BE RELEVANT**

| Category* | Citation of document, with indication, where appropriate, of the relevant passages | Relevant to claim No. |
|---|---|---|
| E | CN 219643080 U (BYD CO., LTD.) 05 September 2023 (2023-09-05) description, paragraphs 0005-0089, and figures 1-9 | 1-7, 9-10 |
| A | CN 207690902 U (BYD CO., LTD.) 03 August 2018 (2018-08-03) claim 10 | 1-10 |
| A | CN 114628864 A (BYD CO., LTD.) 14 June 2022 (2022-06-14) description, paragraphs 0022-0048 | 1-10 |
| A | CN 114597605 A (BYD CO., LTD.) 07 June 2022 (2022-06-07) claims 1-11 | 1-10 |
| A | US 2022416291 A1 (GREE ALTAIRNANO NEW ENERGY INC.) 29 December 2022 (2022-12-29) entire description | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2023** | **21 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116277**

| Patent document cited in search report | | | Publication date (day/month/year) | Patent family member(s) | | | Publication date (day/month/year) |
|---|---|---|---|---|---|---|---|
| CN | 219643080 | U | 05 September 2023 | None | | | |
| CN | 207690902 | U | 03 August 2018 | WO | 2019114780 | A1 | 20 June 2019 |
| | | | | EP | 3726620 | A1 | 21 October 2020 |
| | | | | EP | 3726620 | A4 | 11 August 2021 |
| | | | | KR | 20200096824 | A | 13 August 2020 |
| | | | | KR | 102455775 | B1 | 18 October 2022 |
| | | | | US | 2021083256 | A1 | 18 March 2021 |
| | | | | US | 11522255 | B2 | 06 December 2022 |
| CN | 114628864 | A | 14 June 2022 | None | | | |
| CN | 114597605 | A | 07 June 2022 | None | | | |
| US | 2022416291 | A1 | 29 December 2022 | KR | 20230000994 | A | 03 January 2023 |
| | | | | JP | 2023004982 | A | 17 January 2023 |
| | | | | EP | 4109618 | A1 | 28 December 2022 |

Form PCT/ISA/210 (patent family annex) (July 2022)

**EP 4 675 719 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023204486329